# EUROPÄISCHE PATENTANMELDUNG

(11) **EP 3 428 654 A1**
(43) Veröffentlichungstag der Anmeldung: **16.01.2019**
(21) Anmeldenummer: 17181240.7
(22) Anmeldetag: 13.07.2017
(51) Int. Cl.: G01N 35/10, B01L 3/02, G01N 35/00

(54) **PIPETTIERAUTOMAT UND VERFAHREN ZUM BETREIBEN EINES PIPETTIERAUTOMATEN**

(71) Anmelder: FZMB GmbH Forschungszentrum für Medizintechnik und Biotechnologie, 99947 Bad Langensalza (DE); CYBERTRON Gesellschaft für Kinematische Systeme und Laborautomation mbH, 13507 Berlin (DE)
(72) Erfinder: MIETHE, Peter Dr., 06632 Schleberoda (DE); LANGE, Matthias, 98693 Illmenau (DE); ARNDT, Matthias, 13591 Berlin (DE)
(74) Vertreter: dompatent von Kreisler Selting Werner - Partnerschaft von Patent- und Rechtsanwälten mbB

(57) **Zusammenfassung**

Bei einem Pipettierautomaten (10) wird ein strangförmiger Hohlkörper (26), insbesondere aus Kunststoff bereitgestellt, dessen eines Ende in einer Halteposition, insbesondere in im Wesentlichen einer Vertikalausrichtung gehalten wird. Der Pipettierkopf (14) wird mit seinem Pipettenanschluss (54) an das Hohlkörperende (42) angesetzt. Von dem an seinem Ende mit dem Pipettierkopf (14) verbundenen Hohlkörper (26) wird ein eine Pipette bildendes Hohlkörperstück (56) abgeschnitten. Danach wird ein Pipettiervorgang durchgeführt. Nach dem Pipettiervorgang wird das Hohlkörperstück (56) in einen Abfallbehälter (22) verbracht.

## Beschreibung

Die Erfindung betrifft einen Pipettierautomaten sowie ein Verfahren zum Betreiben eines Pipettierautomaten.

Pipettierautomaten werden in den verschiedensten Bereichen der Diagnostik, Analytik etc. eingesetzt. Während eines automatischen Pipettiervorgangs muss die an den Pipettierkopf angeschlossene Pipette des Öfteren gewechselt werden. Dazu wird der Pipettierkopf zu einem Pipettenbevorratungsgestell verfahren, um von dort eine Pipette zu entnehmen, die nach Durchführung eines Pipettiervorgangs in einen Abfallbehälter abgeworfen wird. Je nach Umfang und Anzahl der Pipettiervorgänge kann es erforderlich sein, ein leeres Pipettenbevorratungsgestell durch ein neues befülltes zu ersetzen. Dies erfordert den Einsatz von Personal. Außerdem ist die Verwendung der Vielzahl von Pipetten mit zusätzlichen Kosten verbunden.

Aufgabe der Erfindung ist es, einen insoweit verbesserten Pipettierautomaten zu schaffen sowie ein Verfahren für seinen Betrieb anzugeben.

Zur Lösung dieser Aufgabe wird mit der Erfindung ein Pipettierautomat vorgeschlagen, der versehen ist mit
- einem verfahrbaren Pipettierkopf, der einen Pipettenanschluss zum Andocken einer Pipette aufweist,
- einer mit dem Pipettenanschluss des Pipettierkopfes in Fluidverbindung stehenden Hubkolbeneinheit zur wahlweisen Erzeugung eines Unter- oder Überdrucks am Pipettenanschluss des Pipettierkopfes,
- einem Vorratsmagazin für einen strangförmigen Hohlkörper, insbesondere aus Kunststoff,
- einer Haltevorrichtung zum Halten des Endes des aus dem Vorratsmagazin herausgeführten Hohlkörpers,
- einer Hohlkörper-Vorschubvorrichtung zum Nachführen des Hohlkörpers an der Haltevorrichtung,
- einer Hohlkörper-Abschneidevorrichtung zum Abschneiden eines Hohlkörperstücks des von der Haltevorrichtung gehaltenen Hohlkörperendes,
- einer Pipettenabziehvorrichtung zum Abziehen einer am Pipettenanschluss des Pipettierkopfes angedockten Pipette,
- einem Abfallbehälter für vom Pipettenanschluss abgezogene Pipetten und
- einer Steuereinheit, die
   - den Pipettierkopf zum Verfahren zur Haltevorrichtung und zum Andocken des von der Haltevorrichtung gehaltenen Hohlkörperendes an den Pipettenanschluss des Pipettierkopfes ansteuert,
   - im Andockzustand des Hohlkörperendes die Hohlkörper-Abschneidevorrichtung zum Abschneiden eines Hohlkörperstücks ansteuert und
   - den Pipettierkopf sowie die Hubkolbeneinheit zur Vorbereitung eines Pipettiervorgangs und während des Pipettiervorgangs ansteuert.

Wesensmerkmal der Erfindung ist es, statt vorgeformter Pipetten bzw. Pipettierspitzen einzelne Stücke von einem strangförmigen Hohlkörper aus insbesondere Kunststoff abzuschneiden und als Pipettierspitze zu verwenden. Bei dem Hohlkörper kann es sich z. B. um ein insbesondere starres Rohr oder um einen insbesondere flexiblen Schlauch handeln. Im Folgenden wird die Erfindung stellvertretend für den strangförmigen Hohlkörper anhand eines Schlauchs beschrieben, und zwar ohne Einschränkung der Allgemeingültigkeit des Begriffs Hohlkörper im Sinne z. B. eines Rohres oder eines Schlauches.

Der Schlauch wird an seinem Ende in einer Halteposition mit entsprechender Ausrichtung gehalten, so dass der Pipettierkopf ähnlich wie beim Andocken von vorgefertigten Pipettierspitzen eines Gestells auf das Schlauchende aufsetzen kann. Anschließend erfolgt das Abschneiden eines Schlauchstücks; das am Pipettierkopf angeschlossene Schlauchstück bildet nun die Pipette. Diese kann mittels einer Formstation noch mit sich verjüngendem Ende versehen werden. Danach kann dann der Pipettiervorgang ausgeführt werden. Nach dem Pipettiervorgang wird dann das Schlauchstück vom Pipettierkopf abgelöst, um in einen Abfallbehälter verbracht zu werden bzw. zu fallen.

In weiterer vorteilhafter Ausgestaltung der Erfindung kann vorgesehen sein, dass die Steuereinheit nach dem Abschneiden eines Schlauchstücks und vor dem Andocken des von der Haltevorrichtung gehaltenen nächsten Schlauchendes an den Pipettenanschluss des Pipettierkopfes die Schlauchvorschubvorrichtung zwecks Nachführung des Schlauches aus dem Magazin ansteuert.

Wie bereits oben ausgeführt, kann das dem Pipettenanschluss des Pipettierkopfes abgewandte freie Ende des Schlauchstücks in einer Schlauchstückende-Formvorrichtung als sich verjüngend zulaufend geformt werden.

In weiterer zweckmäßiger Ausgestaltung der Erfindung kann vorgesehen sein, dass die Schlauchstückende-Formvorrichtung beheizbar ist und eine Aufnahmevertiefung mit für das Schlauchstückende einem Aufnahmeinnenkonus zur Anlage von außen an dem freien Schlauchstückende sowie einen Aufnahmedorn aufweist, auf den das vom Aufnahmeinnenkonus umgebene Schlauchstückende aufsteckbar ist.

Hierbei ist es ferner zweckmäßig, wenn der Aufnahmedorn und/oder der Aufnahmeinnenkonus der Schlauchstückende-Formvorrichtung beheizbar ist.

Zweckmäßig kann es ferner sein, wenn der Pipettenanschluss des Pipettierkopfes zur klemmenden Halterung des Schlauchstücks einen Anschlussstutzen mit einem Innenkonus und/oder einen Anschlusshohldorn mit einem Außenkonus aufweist. Der Innenkonus kann den Schlauch von außen komprimieren bzw. der Außenkonus weitet den Schlauch von innen auf. In beiden Fällen erfolgt die Halterung letztendlich durch eine Klemmung.

Zweckmäßig kann es ferner sein, wenn der Pipettierkopf, die Hubkolbeneinheit, die Schlauchvorschubvorrichtung, die Haltevorrichtung und die Schlauchabschneidevorrichtung jeweils mittels eigener von der Steuereinheit ansteuerbare Antriebe oder Betätigungsmechanismen automatisch betreibbar sind.

Der in einem Vorratsmagazin untergebrachte Schlauch ist zweckmäßigerweise auf eine Trommel oder eine Spule aufgewickelt, von der der Schlauch beim Aktivieren der Schlauchvorschubvorrichtung abwickelbar ist. Diese Schlauchvorschubvorrichtung führt eine Länge von Schlauch nach, die gleich der Länge des am Schlauchende abgeschnittenen Schlauchstücks ist. Wenn es sich bei dem strangförmigen Hohlkörper um einen flexiblen Schlauch handelt, kann dieser, wie zuvor beschrieben, magaziniert sein, und zwar durch Aufwickeln auf einer Trommel oder einer Spule. Werden als strangförmiger Hohlkörper Rohre eingesetzt, so können diese liegend oder stehend magaziniert sein, so dass dann von diesen Rohren einzelne Stücke abgeschnitten werden, die als Pipettierspitze verwendet werden, wie oben beschrieben.

Die oben genannte Aufgabe wird ferner erfindungsgemäß mittels eines Verfahrens zum Betreiben eines Pipettierautomaten gelöst, wobei bei dem Verfahren
- ein Schlauch, insbesondere ein Kunststoffschlauch bereitgestellt wird, dessen eines Ende in einer Halteposition, insbesondere in im Wesentlichen einer Vertikalausrichtung gehalten wird,
- ein Pipettierkopf mit seinem Pipettenanschluss an das Schlauchende angesetzt wird,
- von dem an seinem Ende mit dem Pipettierkopf verbundenen Schlauch ein eine Pipette bildendes Schlauchstück abgeschnitten wird,
- mindestens ein Pipettiervorgang mit Ansaugen von Pipettierflüssigkeit und Pipettieren der Pipettierflüssigkeit in mindestens ein Probengefäß durchgeführt wird und
- das Schlauchstück in einen Abfallbehälter verbracht wird.

In weiterer vorteilhafter Ausgestaltung der Erfindung kann vorgesehen sein, dass das freie Ende des an dem Pipettenanschluss des Pipettierkopfes angeschlossene Schlauchstück zur Bildung eines sich verjüngenden Endes geformt wird, und zwar insbesondere mittels Wärme und/oder Druck.

Ferner kann es zweckmäßig sein, wenn das Ablösen des Schlauchstücks von dem Pipettenanschluss des Pipettierkopfes mittels eines Greifers erfolgt, der das Schlauchstück von dem Pipettenanschluss durch Wegbewegen des Pipettierkopfes vom Pipettenanschluss abzieht und/oder das Schlauchstück hält, damit sich das Schlauchstück beim Wegbewegen des Pipettierkopfes vom Greifer vom Pipettenanschluss ablöst.

Zusammengefasst betrifft die Erfindung einen Pipettierautomaten und ein Verfahren zum Betreiben eines Pipettierautomaten zum Pipettieren von Flüssigkeiten. Der Pipettierautomat konfektioniert ein Schlauchstück/Rohr durch Vorschub (statt der Pipettenspitze). Das Schlauchstück / Rohr wird im Hubkolben an einem Innenkonus oder einem hohlen Dorn an der Außenwand bzw. Innenwand geklemmt. Das in der Länge konfektionierte und im Pipettierkopf eingeklemmte Schlauchstück wird mittels der Schneidvorrichtung abgeschnitten. Der Pipettierkopf wird an einem erhitzbaren Innenkonus positioniert und das Schlauchstück wird zur Nachbearbeitung der Spitze in diesen eingeführt und durch Anschmelzen des Kunststoffmaterials geformt. Der Pipettierautomat führt einen Pipettiervorgang einschließlich des Aufziehens von Pipettierflüssigkeit in das Schlauchstück und anschließendes Pipettieren in mindestens ein Probengefäß aus. Der Pipettierkopf wird über dem Abfallbehälter positioniert und in die Abwurfstation mit Keilhalter bewegt, bis der Schlauch/Rohr eingeklemmt ist. Der Pipettierkopf wird angehoben und der Schlauch/Rohr fällt in den Abfallbehälter.

Die wesentlichen Merkmale der Erfindung lassen sich auch wie folgt beschreiben, wobei eine oder mehrere Gruppen der nachfolgend aufgeführten Merkmale die Erfindung bzw. vorteilhafte Weiterbildungen davon charakterisieren:
1. Pipettierautomat zum Pipettieren von Flüssigkeiten, wobei wenigstens ein länglicher Hohlkörper (Rohr oder Schlauch) statt einer oder mehrerer Pipettenspitze zum Pipettieren verwendet wird und der längliche Hohlkörper abwerfbar ist.
2. Pipettierautomat nach Ziffer 1, wobei der längliche Hohlkörper als Ersatz für eine Pipettenspitze fungiert.
3. Pipettierautomat nach Ziffer 1, wobei der abgetrennte länglicher Hohlkörper aus einem "Endlos"-Materialvorrat bezogen wird/werden kann.
4. Pipettierautomat nach Ziffer 1, wobei die Konfektionierung des abgetrennten länglichen Hohlkörpers in Abhängigkeit vom zu pipettierenden Volumen erfolgt.
5. Pipettierautomat nach Ziffer 1, wobei der längliche Hohlkörper auch bereits vor dem Abtrennen als "Endlos"-Material zum Pipettieren verwendet werden kann.
6. Pipettierautomat nach Ziffer 1, wobei das Ende des Hohlkörpers thermisch verformt werden kann
7. Pipettierautomat nach Ziffer 1, wobei die Dichtung über die Innenwandung und/oder Außenwandung des länglichen Hohlkörpers erfolgt/erfolgen kann.
8. Pipettierautomat nach Ziffer 1, wobei nach einem Pipettiervorgang das Schlauchstück vom Pipettierkopf getrennt wird.
9. Pipettierautomat nach Ziffer 1, wobei das "Endlos"-Material aus einem Magazin zugeführt wird.

Die Erfindung wird nachfolgend anhand eines Ausführungsbeispiels sowie unter Bezugnahme auf die Zeichnung näher erläutert. Im Einzelnen zeigen dabei:
- Fig. 1: eine perspektivische Darstellung eines Pipettierautomaten gemäß einem Ausführungsbeispiel der Erfindung,
- Fig. 2: eine vergrößerte Darstellung der Schlauchvorschub-Vorrichtung,
- Fig. 3: die Situation, in der der Pipettierkopf auf das bereitgestellte Ende des von einer Haltevorrichtung an der Schlauchvorschub-Vorrichtung gehaltenen Schlauches andockt,
- Fig. 4: den Abschneidevorgang des Schlauches zur Bildung einer Pipettierspitze,
- Fig. 5: die Situation, in der der Pipettierkopf von der Schlauchvorschub-Vorrichtung wieder entfernt ist und der Schlauch in der Schlauchvorschub-Vorrichtung nachgeführt ist,
- Fig. 6: die Situation kurz vor der Formung des freien Endes des am Pipettierkopf befindlichen Schlauchstücks,
- Fig. 7: den Vorgang der Warmverformung des Endes des Schlauchstücks,
- Fig. 8: die Situation, in der der Pipettierkopf mit dem Schlauchstück von der Schlauchstückende-Formvorrichtung wegbewegt ist,
- Fig. 9: das Eintauchen des Pipettierkopfes im Bereich des Abfallbehältnisses zum Abtrennen des Schlauchstücks vom Pipettierkopf und
- Fig. 10: die Situation, in der der Pipettierkopf angehoben ist und das Schlauchstück in den Abfallbehälter hineinfällt.

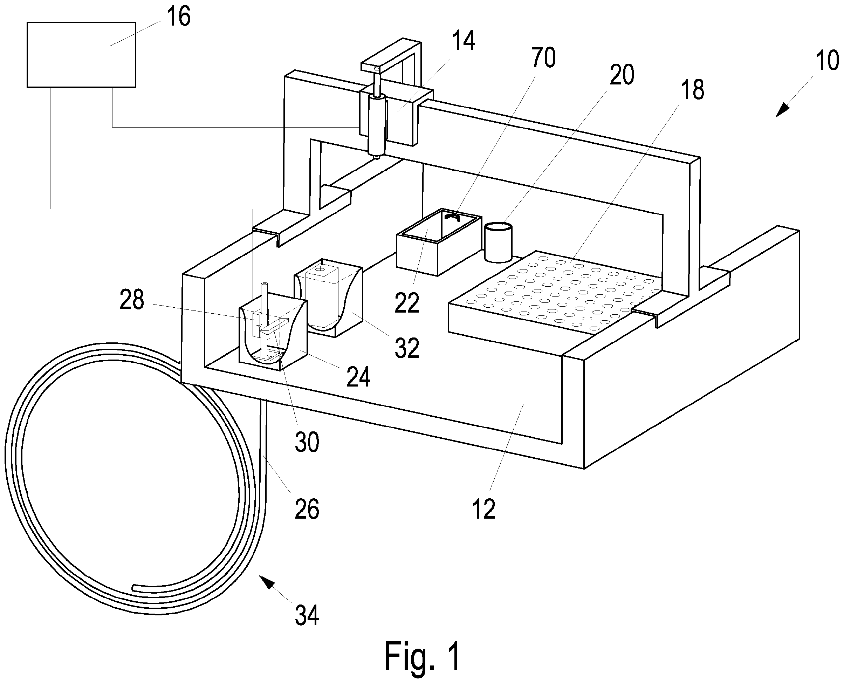

Fig. 1 zeigt eine Gesamtübersicht eines Pipettierautomaten 10 gemäß einem Ausführungsbeispiel der Erfindung. Der Pipettierautomat 10 weist einen Tisch 12 auf, über den ein Pipettierkopf 14 verfahrbar angeordnet ist. Der Pipettierkopf 14 kann, wie an sich bekannt, in X- und Y-Richtung sowie in Z-Richtung bewegt werden. Die Steuerung des Pipettierkopfes 14 erfolgt durch eine Steuereinheit 16 mit Mikrocontroller-Arbeitsspeicher und diversen Schnittstellen, wie es für die Steuerung von Prozessen grundsätzlich bekannt ist.

Auf dem Tisch 12 befindet sich eine Mikrotiterplatte 18, ein Gefäß 20 für Pipettierflüssigkeit, ein Abfallbehälter 22 für gebrauchte Pipettierspitzen, eine Hohlkörper-Vorschubvorrichtung 24 für in diesem Ausführungsbeispiel einen Endlosschlauch 26, eine Haltevorrichtung 28 mi einer Hohlkörper-Abschneidevorrichtung 30 und eine Hohlkörperstückende-Formvorrichtung 32. Die zuletzt genannten Vorrichtungen werden ebenfalls von der Steuereinheit 16 gesteuert.

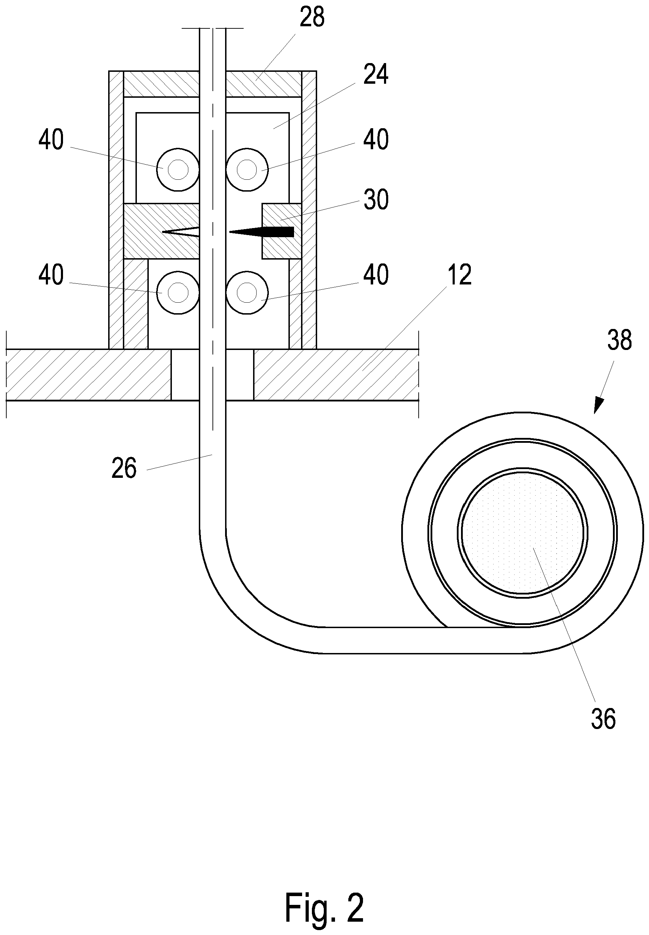

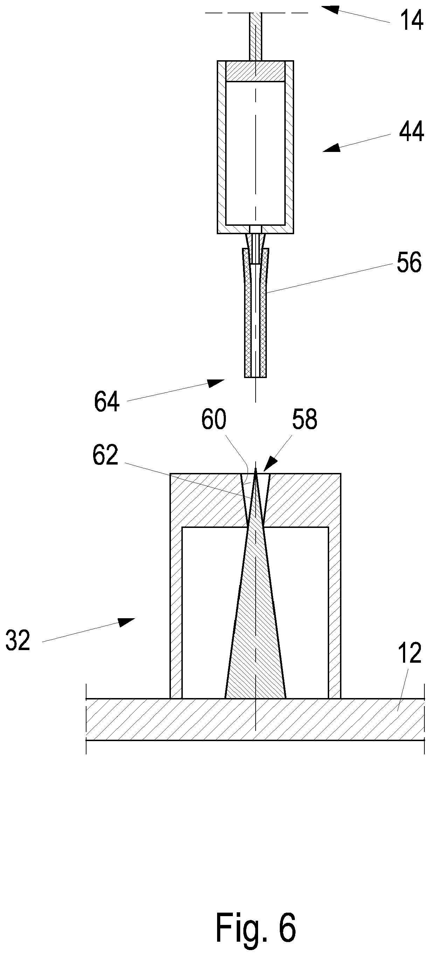

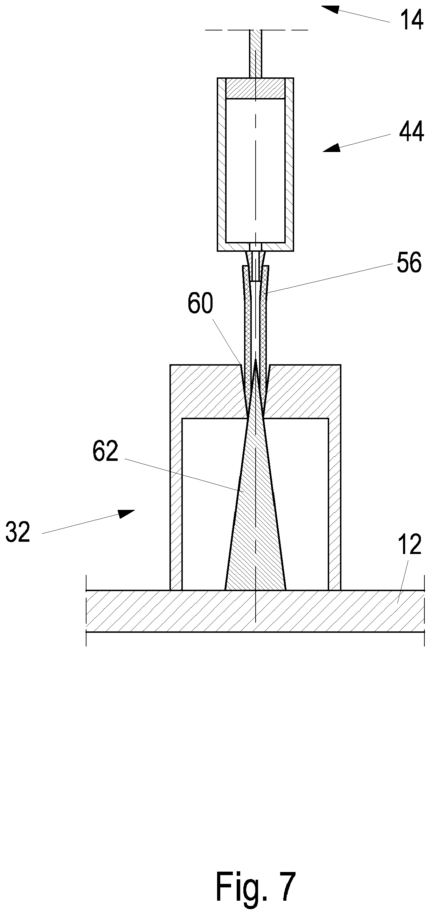

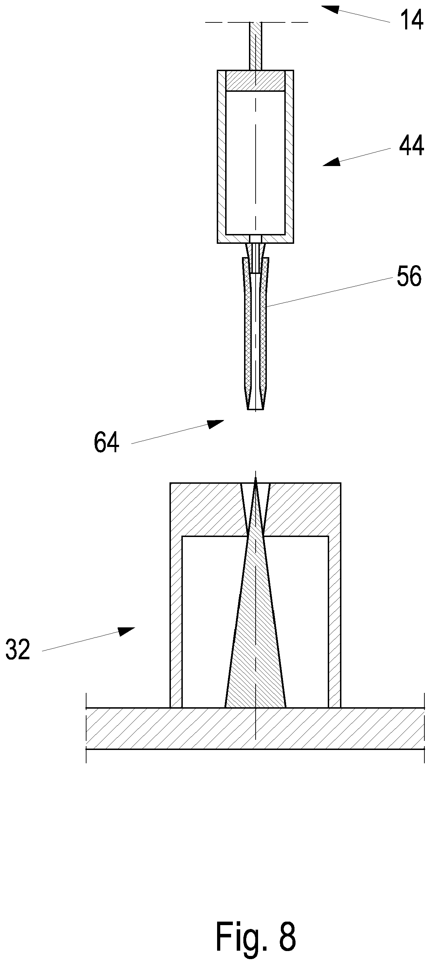

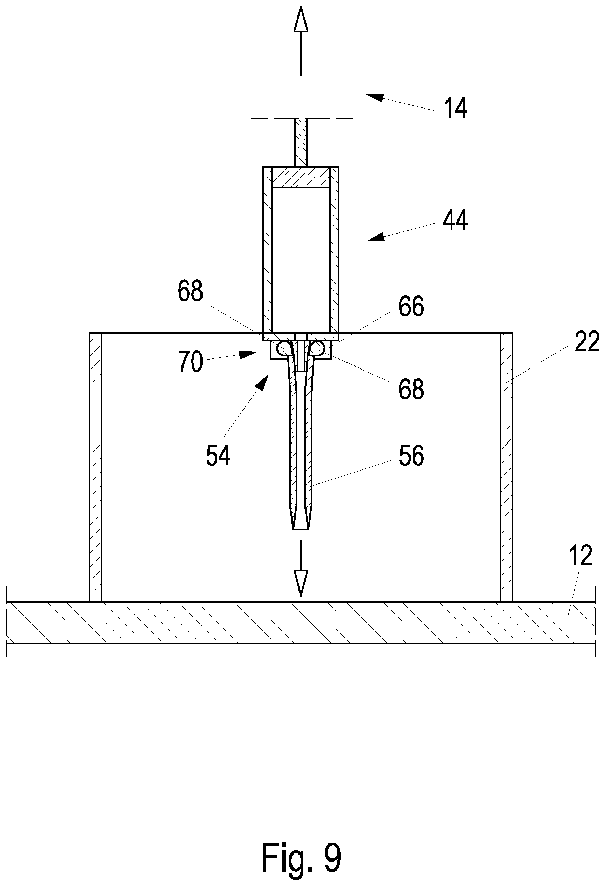

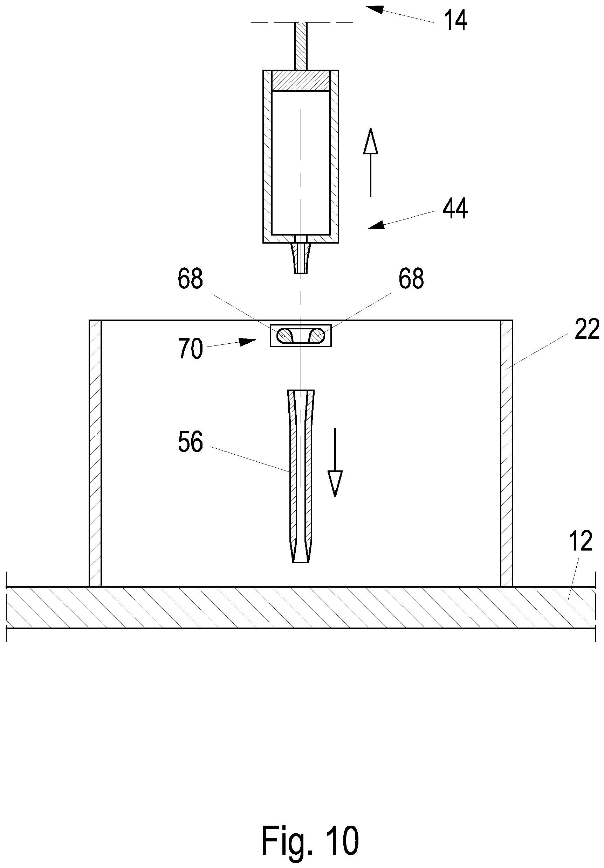

Anhand der Fign. 2 bis 10 wird nachfolgend der Prozess beschrieben, der abläuft, um vom Schlauch 26, d. h. vom strangförmigen Hohlkörper 34 ein Stück abzuschneiden und dieses zum Pipettieren zu verwenden sowie anschließend in den Abfallbehälter 22 zu verbringen.

Fig. 2 zeigt die Situation, in der der Schlauch 26, der beispielsweise auf eine Trommel oder Spule 36 eines Vorratsmagazins 38 aufgewickelt ist, von der Hohlkörper-Vorschubvorrichtung 24 bis zur Haltevorrichtung 28 vorgeschoben und an der Haltevorrichtung 28 in Position gehalten wird. Die Hohlkörper-Vorschubvorrichtung weist beispielsweise Vorschubrollen 40 auf. Zwischen diesen Vorschubrollen 40 ist die Hohlkörper-Abschneidevorrichtung 30 angeordnet.

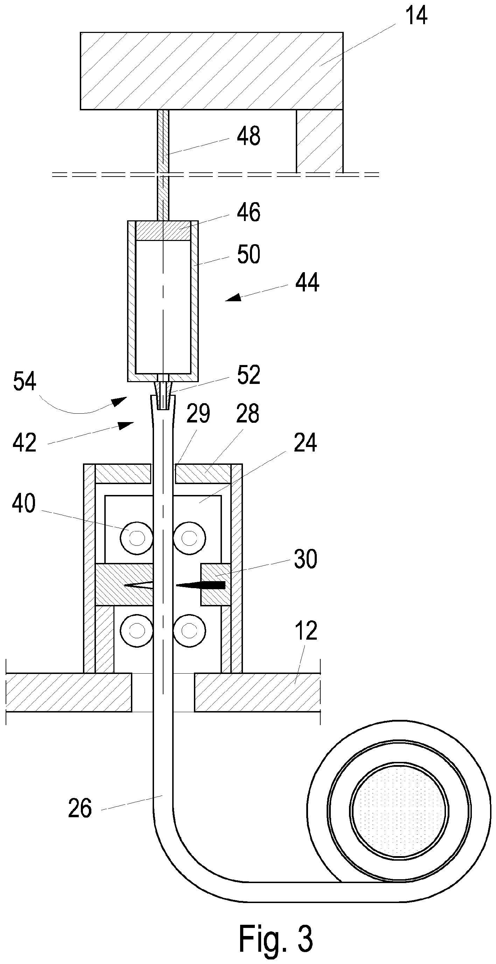

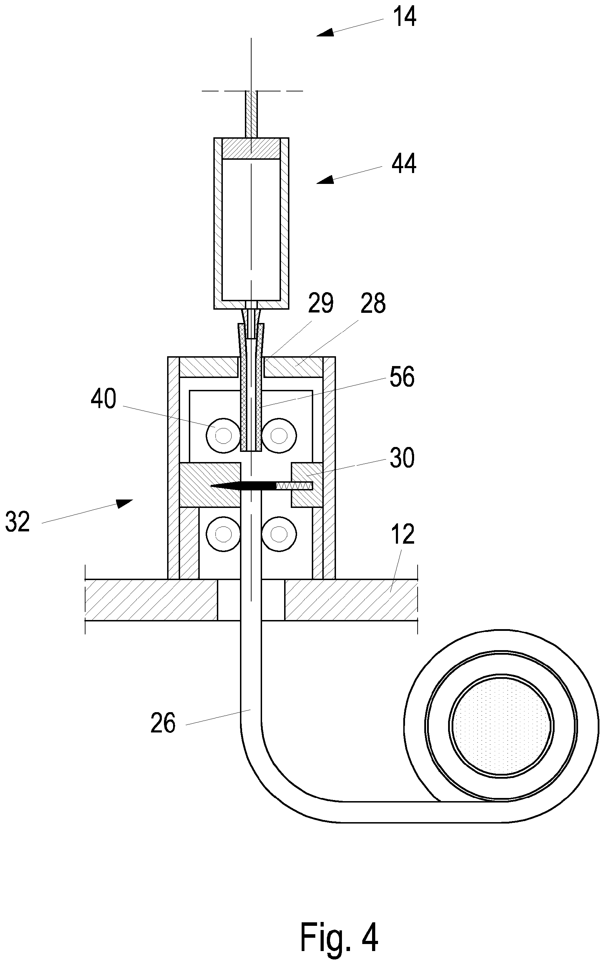

Gemäß Fig. 3 dockt nun der Pipettierkopf 14 in diesem Ausführungsbeispiel von oben an dem Schlauchende 42 an. Der Pipettierkopf 14 weist eine Hubkolbeneinheit 44 mit einem Kolben 46 und einer Kolbenstange 48 und einem Zylinder 50 auf, an dem ein Hohldorn 52 als Pipettenanschluss 54 des Pipettierkopfes 14 angeordnet ist. Der Hohldorn 52 taucht in das Schlauchende 42 ein, woraufhin die Hohlkörper-Abschneidevorrichtung 30 aktiviert wird, die ein Stück 56 des Schlauches 26 abschneidet (siehe Fig. 4).

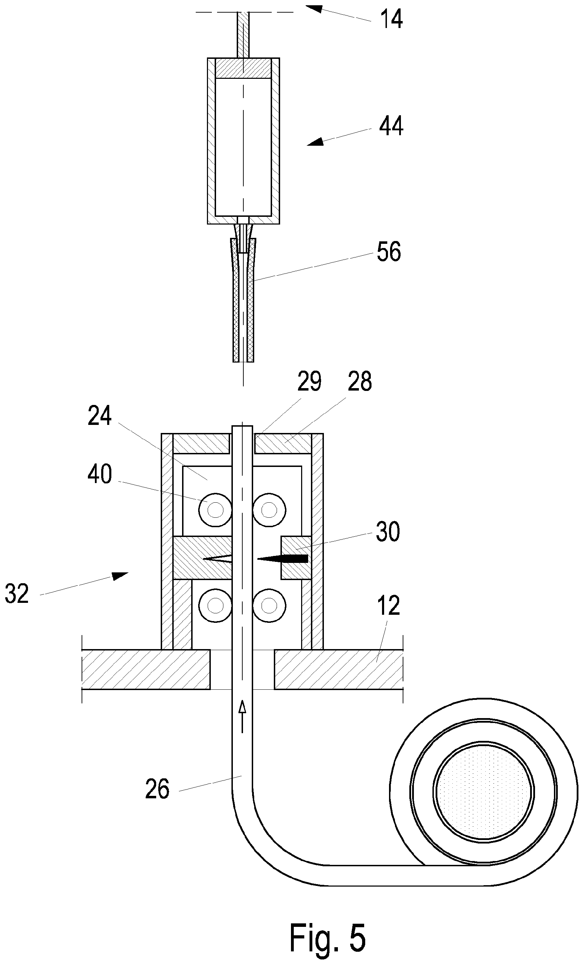

Anschließend fährt der Pipettierkopf nach oben und nimmt das Schlauchstück 56 mit, woraufhin von unten der Schlauch 26 nachgeführt wird, wie es beispielsweise in Fig. 5 gezeigt ist.

Bei der Haltevorrichtung 28 handelt es sich in diesem Ausführungsbeispiel um eine Positionierhilfe mit beispielsweise einer Durchführöffnung 29, durch die hindurch der Schlauch 26 geführt ist, wobei der Schlauch 26 oberhalb der Durchführöffnung 29 endet. Nach dem Andocken des Pipettierkopfes 14 an den Schlauch 26 kann der Pipettierkopf 14 unter gleichzeitiger Nachführung des Schlauches 26 nach oben bewegt werden. Ist der Pipettierkopf 14 um die Länge des abzutrennenden Schlauchstücks 58 angehoben, wird die Hohlkörper-Abschneidevorrichtung 30 aktiviert, die in diesem Fall oberhalb der Haltevorrichtung 28 angeordnet sein kann.

Der Pipettierkopf 14 mit seiner Hubkolbeneinheit 44 wird dann zur Hohlkörperstückende-Formvorrichtung 32 bewegt, die eine Aufnahme 58 mit einem Innenkonus 60 und einen Formdorn 62 aufweist. Innenkonus 60 und Formdorn 62 sind ineinander geführt, so dass nun das Ende 64 des am Pipettierkopf 14 befindlichen Schlauchstücks 56 beim Eintauchen in die Aufnahme 58 unter Einwirkung von Wärme verformt wird. Dazu weist das Material des Schlauchstücks 56 entsprechende thermische Eigenschaften auf.

Anschließend bewegt sich der Pipettierkopf 14 mitsamt seines nun am freien Ende 64 geformten Schlauchstücks 56 von der Hohlkörperstückende-Formvorrichtung 32 weg, um einen Pipettiervorgang durchzuführen. Dazu wird zunächst aus dem Gefäß 20 Pipettierflüssigkeit in das Schlauchstück 56 angesaugt, um dann in die Mikrotiterplatte 18 pipettiert zu werden.

Nach einem Pipettiervorgang fährt der Pipettierkopf 14 zum Abfallbehälter 22, der eine kabelförmige Pipettenabziehvorrichtung 66 aufweist. Durch Bewegung des Pipettierkopfes 14 wird dessen Pipettenanschluss 54 in den Bereich zwischen zwei Stifte oder Arme 68 einer Abstreifgabel 70 der Pipettenabziehvorrichtung 66 verbracht, so dass diese beiden Arme 68 von oben auf dem Anschlussende des Schlauchstücks 56 aufliegen. Durch Hochbewegen des Pipettierkopfes 14 wird damit das Schlauchstück 56 durch die Arme 68 der Pipettenabziehvorrichtung 66 vom Hohldorn 52 des Pipettenanschlusses 54 abgestreift und fällt in den Behälter 22.

Alternativ zur Abstreifgabel 70 kann die Pipettenabziehvorrichtung 66 einen aktive bewegbaren Abziehgreifer aufweisen, der bei über dem Abfallbehälter 22 positioniertem Pipettierkopf 14 das Schlauchstück 58 erfasst und von dem Pipettenanschluss 54 des Pipettierkopfes 14 aktiv abzieht. Schließlich kann ein solcher Abziehgreifer auch an dem Pipettierkopf 14 selbst angeordnet sein.

### BEZUGSZEICHENLISTE

- 10: Pipettierautomat
- 12: Tisch
- 14: Pipettierkopf
- 16: Steuereinheit
- 18: Mikrotiterplatte
- 20: Gefäß
- 22: Abfallbehälter
- 24: Hohlkörper-Vorschubvorrichtung
- 26: Schlauch
- 28: Haltevorrichtung
- 29: Durchführöffnung
- 30: Hohlkörper-Abschneidevorrichtung
- 32: Hohlkörperstückende-Formvorrichtung
- 34: Hohlkörper
- 36: Spule
- 38: Vorratsmagazin
- 40: Vorschubrollen
- 42: Schlauchende
- 44: Hubkolbeneinheit
- 46: Kolben
- 48: Kolbenstange
- 50: Zylinder
- 52: Hohldorn
- 54: Pipettenanschluss
- 56: Schlauchstück
- 58: Aufnahme
- 60: Innenkonus
- 62: Formdorn
- 64: Ende
- 66: Pipettenabziehvorrichtung
- 68: Arme
- 70: Abstreifgabel

## Patentansprüche

1. Pipettierautomat mit
- einem verfahrbaren Pipettierkopf (14), der einen Pipettenanschluss (54) zum Andocken einer Pipette aufweist,
- einer mit dem Pipettenanschluss (54) des Pipettierkopfes (14) in Fluidverbindung stehenden Hubkolbeneinheit (44) zur wahlweisen Erzeugung eines Unter- oder Überdrucks am Pipettenanschluss (54) des Pipettierkopfes (14),
- einem Vorratsmagazin (38) für einen strangförmigen Hohlkörper (26), insbesondere aus Kunststoff,
- einer Haltevorrichtung (28) zum Halten des Endes (42) des aus dem Vorratsmagazin (38) herausgeführten Hohlkörpers (26),
- einer Hohlkörper-Vorschubvorrichtung (24) zum Nachführen des Hohlkörpers (26) zu der Haltevorrichtung (28),
- einer Hohlkörper-Abschneidevorrichtung (30) zum Abschneiden eines Hohlkörperstücks (56) des von der Haltevorrichtung (28) gehaltenen Hohlkörperendes (42),
- einer Pipettenabziehvorrichtung (66) zum Abziehen einer am Pipettenanschluss (54) des Pipettierkopfes (14) angedockten Pipette,
- einem Abfallbehälter (22) für vom Pipettenanschluss (54) abgezogene Pipetten und
- einer Steuereinheit (16), die
- den Pipettierkopf (14) zum Verfahren zur Haltevorrichtung (28) und zum Andocken des von der Haltevorrichtung (28) gehaltenen Hohlkörperendes (42) an den Pipettenanschluss (54) des Pipettierkopfes (14) ansteuert,
- im Andockzustand des Hohlkörperendes (42) die Hohlkörper-Abschneidevorrichtung (30) zum Abschneiden eines Hohlkörperstücks (56) ansteuert und
- den Pipettierkopf (14) sowie die Hubkolbeneinheit (44) zur Vorbereitung eines Pipettiervorgangs und während des Pipettiervorgangs ansteuert.

2. Pipettierautomat nach Anspruch 1, **dadurch gekennzeichnet, dass** die Steuereinheit (16) nach dem Abschneiden eines Hohlkörperstücks (56) und vor dem Andocken des von der Haltevorrichtung (28) gehaltenen nächsten Hohlkörperendes (42) an den Pipettenanschluss (54) des Pipettierkopfes (14) die Hohlkörper-Vorschubvorrichtung (24) zwecks Nachführung des Hohlkörpers (26) aus dem Vorratsmagazin (38) ansteuert.

3. Pipettierautomat nach Anspruch 1, **gekennzeichnet durch** eine Hohlkörperstückende-Formvorrichtung (32) zum Formen des dem Pipettenanschluss (54) des Pipettierkopfes (14) abgewandten freien Endes (64) des Hohlkörperstücks (56) als sich verjüngend verlaufend.

4. Pipettierautomat nach Anspruch 3, **dadurch gekennzeichnet, dass** die Hohlkörperstückende-Formvorrichtung (32) beheizbar ist und eine Aufnahmevertiefung (58) für das Hohlkörperstückende (64) mit einem Aufnahmeinnenkonus (60) zur Anlage von außen an dem freien Hohlkörperstückende (64) sowie einen Formdorn (62) aufweist, auf den das vom Aufnahmeinnenkonus (60) umgebene Hohlkörperstückende (64) aufsteckbar ist.

5. Pipettierautomat nach Anspruch 4, **dadurch gekennzeichnet, dass** der Formdorn (62) und/oder der Aufnahmeinnenkonus (60) der Hohlkörperstückende-Formvorrichtung (32) beheizbar ist/sind.

6. Pipettierautomat nach einem der Ansprüche 1 bis 5, **dadurch gekennzeichnet, dass** der Pipettenanschluss (54) des Pipettierkopfes (14) zur klemmenden Halterung des Hohlkörperstücks (56) einen Anschlussstutzen mit einem Innenkonus und/oder einen Anschlusshohldorn (52) mit einem Außenkonus aufweist.

7. Pipettierautomat nach einem der Ansprüche 1 bis 6, **dadurch gekennzeichnet, dass** der Pipettierkopf (14), die Hubkolbeneinheit (44), die Hohlkörper-Vorschubvorrichtung (24), die Haltevorrichtung (28) und die Hohlkörper-Abschneidevorrichtung (30) jeweils mittels eigener von der Steuereinheit (16) ansteuerbare Antriebe oder Betätigungsmechanismen automatisch betreibbar sind.

8. Pipettierautomat nach einem der Ansprüche 1 bis 7, **dadurch gekennzeichnet, dass** das Vorratsmagazin (38) eine Trommel oder eine Spule (36) aufweist, auf der der Hohlkörper (26) aufgewickelt ist und von der der Hohlkörper (26) bei Aktivierung der Hohlkörper-Vorschubvorrichtung (24) abwickelbar ist.

9. Verfahren zum Betreiben eines Pipettierautomaten, wobei bei dem Verfahren
- ein Hohlkörper (26), insbesondere aus Kunststoff bereitgestellt wird, dessen eines Ende (42) in einer Halteposition, insbesondere in im Wesentlichen einer Vertikalausrichtung gehalten wird,
- ein Pipettierkopf (14) mit seinem Pipettenanschluss (54) an das Hohlkörperende (42) angesetzt wird,
- von dem an seinem Ende (42) mit dem Pipettierkopf (14) verbundenen Hohlkörper (26) ein eine Pipette bildendes Hohlkörperstück (56) abgeschnitten wird,
- mindestens ein Pipettiervorgang mit Ansaugen von Pipettierflüssigkeit und Pipettieren der Pipettierflüssigkeit in mindestens ein Probengefäß durchgeführt wird und
- das Hohlkörperstück (56) in einen Abfallbehälter (22) verbracht wird.

10. Verfahren nach Anspruch 9, **dadurch gekennzeichnet, dass** das freie Ende (64) des an dem Pipettenanschluss (54) des Pipettierkopfs (14) angeschlossene Hohlkörperstück (56) zur Bildung eines sich verjüngenden Endes geformt wird, und zwar insbesondere mittels Wärme und/oder Druck.

11. Verfahren nach Anspruch 9 oder 10, **dadurch gekennzeichnet, dass** das Ablösen des Hohlkörperstücks (56) von dem Pipettenanschluss (54) des Pipettierkopfes (14) mittels eines Greifers erfolgt, der das Hohlkörperstück (56) von dem Pipettenanschluss (54) durch Wegbewegen des Pipettierkopfes (14) vom Pipettenanschluss (54) abzieht und/oder das Hohlkörperstück (56) hält, damit sich das Hohlkörperstück (56) beim Wegbewegen des Pipettierkopfes (14) vom Greifer vom Pipettenanschluss (54) ablöst.
